Europäisches Patentamt

European Patent Office

Office européen des brevets

(11) Veröffentlichungsnummer: **0 595 961 B1**

(12) **EUROPÄISCHE PATENTSCHRIFT**

(45) Veröffentlichungstag der Patentschrift: **04.10.95**

(51) Int. Cl.⁶: **B60T 1/10**, B60T 13/74, B60L 7/18

(21) Anmeldenummer: **92916186.7**

(22) Anmeldetag: **23.07.92**

(86) Internationale Anmeldenummer:
**PCT/EP92/01681**

(87) Internationale Veröffentlichungsnummer:
**WO 93/01959 (04.02.93 93/04)**

(54) **BREMSANLAGE FÜR KRAFTFAHRZEUGE MIT ELEKTRISCHEM ANTRIEB.**

(30) Priorität: **24.07.91 DE 4124496**

(43) Veröffentlichungstag der Anmeldung:
**11.05.94 Patentblatt 94/19**

(45) Bekanntmachung des Hinweises auf die
Patenterteilung:
**04.10.95 Patentblatt 95/40**

(84) Benannte Vertragsstaaten:
**DE FR GB**

(56) Entgegenhaltungen:
EP-A- 0 083 557        EP-A- 0 361 708
EP-A- 0 418 995        DE-A- 3 806 786
US-A- 4 270 806        US-A- 4 425 005
US-A- 4 671 577

(73) Patentinhaber: **ITT Automotive Europe GmbH
Guerickestrasse 7
D-60488 Frankfurt am Main (DE)**

(72) Erfinder: **LOHBERG, Peter
Am Ringelsberg 7
D-6382 Friedrichsdorf (DE)**
Erfinder: **KLEIN, Hans-C.
Hofheimer Strasse 22
D-6234 Hattersheim (DE)**
Erfinder: **DROTT, Peter
Am Kunzengarten 43
D-6230 Frankfurt am Main 80 (DE)**
Erfinder: **BALZ, Jürgen
Niederwaldstrasse 16
D-6200 Wiesbaden (DE)**

**Beschreibung**

Die Erfindung betrifft eine Bremsanlage mit elektrischem Antrieb und einer angetriebenen und einer nicht angetriebenen Achse, die in Form eines mehrkreisigen, aus hydraulischen Reibungsbremsen und aus einem elektro-regenerativen Bremssystem bestehenden Verbundsystems ausgebildet ist, wobei das elektro-regenerative Bremssystem den oder mindestens einen der elektrischen Antriebsmotore des Kraftfahrzeuges zur Abbremsung und zur Energierückgewinnung nutzt und wobei drei Bremskreise vorgesehen sind, von denen ein Bremskreis einen pedalbetätigten Bremsdruckgeber und auf die nicht angetriebenen Räder wirkende Reibungsbremsen umfaßt, ein zweiter Bremskreis durch das direkt oder indirekt mit dem Bremspedal gekoppelte, auf die angetriebenen Räder wirkende elektro-regenerative Bremssystem gebildet ist und ein dritter Bremskreis ebenfalls auf die angetriebenen Räder wirkende, mit dem Bremspedal gekoppelte, Reibungsbremsen umfaßt.

Eine derartige Bremsanlage ist z.B. aus der DE-OS 25 45 542 bekannt. Bei der vorbekannten Bremsanlage ist den den angetriebenen Rädern zugeordneten Bremsen eine Kombination von zwei parallelgeschalteten Ventilen vorgeschaltet, die aus einem elektromagnetisch betätigbaren sowie einem druckgesteuerten Ventil besteht. Mit der erwähnten Ventilkombination sind lediglich zwei Schaltzustände realisierbar, in denen entweder die auf die angetriebenen Räder wirkenden Bremsen an den Bremsdruckgeber ungehindert angeschlossen sind oder der in diesen Bremsen wirkende hydraulische Druck bei einer regenerativen bzw. Nutzbremsung begrenzt wird.

Als nachteilig wird bei der bekannten Bremsanlage die Tatsache empfunden, daß keine Möglichkeit besteht, das Verhalten des elektrischen Antriebsmotors zu erkennen und den hydraulischen Anteil der Bremskraft an seine Kennlinie optimal anzupassen.

Das Dokument EP-A-0 361 708 zeigt eine Bremsanlage mit sowohl einem elektro-regenerativen Bremssystem an einer Achse, als auch Reibungsbremsen an beiden Achsen eines elektrisch angetriebenen Fahrzeuges. Der Bremsdruck vom Hauptbremszylinder wird über zwei E/M-Ventile für die jeweiligen Bremsen der Vorder- und Hinterachse gesteuert.

Es ist Aufgabe der vorliegenden Errfindung, die Bremsanlage der eingangs genannten Art so zu gestalten, daß der hydraulische Bremskraftanteil während eines Bremsvorganges entsprechend dem Verhalten des Antriebsmotors kontinuierlich angepaßt wird, um eine optimale Energierückgewinnung zu erreichen.

Diese Aufgabe wird erfindungsgemäß dadurch gelöst, daß die Betätigung der an den zweiten und der an den dritten Bremskreis angeschlossenen Reibungsbremsen und die Bremskraftverteilung auf die Vorder- und Hinterachse mit Hilfe eines elektronischen Reglers steuerbar sind, der Informationen über die Bremspedalstellung und/oder über den durch die Pedalbetätigung hervorgerufenen Bremsdruck oder über das Bremsmoment über die Gaspedalstellung, über die Fahrzeuggeschwindigkeit und über den Ladezustand der Fahrzeugbatterien oder zumindest einige dieser Informationen erhält und diese Informationen zur Steuerung der auf die angetriebenen Räder wirkenden Bremsen auswertet. Durch diese Maßnahmen wird erreicht, daß die den angetriebenen Rädern zugeordneten Reibungsbremsen an den häufigsten Bremsvorgängen nicht beteiligt sind, da der Antriebsmotor auf Grund seines Drehmomentverhaltens die erforderliche Bremskraft alleine aufbringt. Außerdem ist es möglich, verschiedene Bremskraftverteilungskennlinien entsprechend den Forderungen nach idealer Bremskraftverteilung und maximaler Energierückgewinnung zu realisieren.

Ferner ist es in manchen Anwendungsfällen vorteilhaft, wenn die Bremsanlage zusätzlich zu dem elektro-regenerativen Bremsensystem auf die angetriebenen Räder wirkenden Reibungsbremsen mit einem elektro-hydraulischen oder elektro-mechanischen Antrieb bzw. Betätigungsmechanismus ausgerüstet ist. Andererseits kann auch ein hydraulisches System vorgesehen sein, bei dem über elektrisch umschaltbare Hydraulikventile eine Hilfsdruckquelle bzw. ein Druckausgleichsbehälter anschaltbar sind. Die Hilfsdruckquelle umfaßt dabei zweckmäßigerweise eine elektromotorisch angetriebene Hydraulikpumpe und einen Druckspeicher. Die Bremsdruckregelung erfolgt allein durch elektrische Ansteuerung der Hydraulikventile, über die sich praktisch jeder gewünschte Bremsdruck in den Radbremsen einstellen läßt. In dem elektronischen Regler werden die erforderlichen Ansteuerpulse errechnet.

Nach einer anderen Ausführungsart variiert der elektronische Regler der erfindungsgemäßen Bremsanlage die Bremskraftverteilung in Abhängigkeit von der Beladung des Fahrzeugs und/oder der dynamischen Achslastverteilung oder von der Fahrsituation, z.B. von einer Notbremssituation.

Eine weitere wichtige Ausführungsart der Erfindung besteht darin, daß der erste und der dritte hydraulische Bremskreis durch Einfügen von Hydraulikventilen, die in Abhängigkeit von dem Drehverhalten der einzelnen Räder steuerbar sind, in an sich bekannter Weise zu einem Blockierschutz- und/oder Antriebsschlupf-Regelungssystem erweitert sind. Für die Dauer der Regelung wird zweckmäßigerweise das elektro-regenerative Bremsensystem abgeschaltet.

Um jedes angetriebene Rad situationsabhängig mit einem anderen Bremsdruck-Sollwert bremsen zu können besteht eine weitere wichtige Ausführungsvariante der Erfindung darin, daß der dritte Bremskreis so aufgeteilt ist, daß eine Betätigung der auf die angetriebenen Räder wirkenden Reibungsbremsen unabhänig voneinander möglich ist.

Dabei ist es besonders vorteilhaft, wenn die auf die angetriebenen Räder wirkenden Radbremsen über elektrisch umschaltbare Hydraulikventile einerseits an hydraulische Speicher und andererseits an eine Hilfsdruckquelle sowie einen Druckausgleichsbehälter anschließbar sind, wobei an die Hilfsdruckquelle gleichzeitig ein weiterer hydraulischer Speicher angeschlossen ist, der über weitere elektrisch umschaltbare Hydraulikventile sowohl mit den auf die nicht angetriebenen Räder wirkenden Reibungsbremsen als auch den auf die angetriebenen Räder wirkenden Reibungsbremsen verbindbar ist.

Außerdem ist es sinnvoll, wenn auf den Bremsdruckgeber, über eine beispielsweise mechanische Summierstufe die Pedalkraft und eine mit Hilfe eines z.B. elektrischen Aktuators erzeugte Stellkraft einwirken. Zur Begrenzung der Pedalkraft kann im Falle einer Blockierschutzregelung ein elektrisch betätigter Pedalwegbegrenzer vorgesehen sein. Bremsanlagen mit derartigen mechanischen Summierstufen und Aktuatoren sind aus der DE 38 06 786 A1 bekannt. Auf solche Weise lassen sich mit relativ geringem Aufwand geregelte Bremsanlagen herstellen.

Weitere Merkmale, Vorteile und Anwendungsmöglichkeiten der Erfindung gehen aus der folgenden Beschreibung anhand der beigefügten Abbildungen von Ausführungsbeispielen hervor.

Es zeigen

Fig. 1    in schematischer, vereinfachter Darstellungsweise die wichtigsten Komponenten einer Bremsanlage nach der Erfindung,

Fig. 2    in gleicher Darstellungsweise eine weitere Ausführungsart der Erfindung,

Fig. 3    in gleicher Darstellungsweise eine Bremsanlage mit Blockierschutzregelung,

Fig. 4    in gleicher Darstellungsweise ein zweites Ausführungsbeispiel einer Bremsanlage mit Blockierschutzregelung,

Fig. 5    in Prinzipdarstellung die konstruktive Ausbildung einer Summierstufe der Bremsanlage nach Fig. 4 und

Fig. 6    in der den Fig. 1 bis Fig. 4 entsprechenden Darstellungsweise ein drittes Ausführungsbeispiel einer Bremsanlage mit Blockierschutzregelung,

Fig. 7    das Ablaufdiagramm eines Bremsvorganges mit Hilfe der Bremsanlage nach Fig. 1.

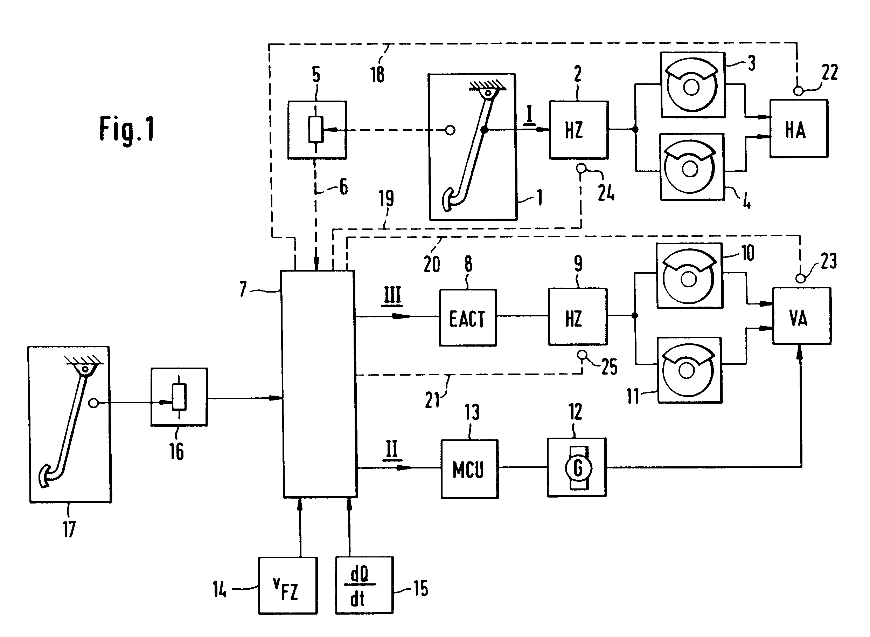

Die Bremsanlage nach Fig. 1 ist für ein Fahrzeug mit Vorderradantrieb vorgesehen. Die erfindungsgemäße Bremsanlage hat in dieser Ausführungsart der Erfindung drei voneinander unabhängige Bremskreise I, II und III. Der auf die nicht angetriebenen Räder, nämlich die Hinterräder (Hinterachse HA) wirkende Bremskreis enthält einen von einem Bremspedal 1 betätigten Hauptzylinder 2, an den unmittelbar die Radbremsen 3 und 4 der Hinterachse HA angeschlossen sind. Es handelt sich also bei diesem Bremskreis I um eine herkömmliche, hydraulisch betätigte Reibungsbremse.

Mit Hilfe des Bremspedals 1 werden jedoch auch die beiden anderen Bremskreise II und III, die zusammen mit dem Bremskreis I ein Verbundsystem bilden, betätigt. Hierzu ist das Bremspedal 1 mit einem Pedalstellungsgeber 5 ausgerüstet, der von dem Pedalweg oder der Pedalstellung abhängige elektrische Signale über eine Signalleitung 6 einem elektronischen Regler 7 zuführt. An diesen Regler 7 sind die beiden Bremskreise II, III angeschlossen, die beide auf die Räder der Vorderachse VA wirken.

Der Bremskreis III enthält einen elektrisch steuerbaren Aktuator 8 und einen Hauptzylinder 9, an den wiederum ähnlich wie im Bremskreis I hydraulisch betätigbare Radbremsen 10,11, nämlich Scheibenbremsen oder Trommelbremsen, angeschlossen sind. Der Aktuator 8 könnte beispielsweise als Elektromotor mit einem Spindeltrieb ausgebildet sein, damit in herkömmlicher Weise in Abhängigkeit von den Ansteuersignalen eine direkt oder über eine Druckmittelverbindung auf den Kolben im Hauptzylinder 9 übertragbare Kraft zur axialen Verschiebung des Kolbens entsteht.

Der dritte Bremskreis, nämlich der Bremskreis II ist im Gegensatz zu den Bremskreisen I, III als Bestandteil eines elektro-regenerativen Bremssystems ausgebildet. Über diesen Zweig bzw. diesen Bremskreis soll bei jedem Bremsvorgang Energie zurückgewonnen werden. Dieser Bremskreis II wird im wesentlichen durch den Kraftfahrzeugantriebsmotor 12 mit der zugehörigen Ansteuerelektronik 13 gebildet, die wiederum von dem elektronischen Regler 7 in Abhängigkeit von verschiedenen Informationen und in Abstimmung mit den beiden anderen Bremskreisen I, III aktiviert wird.

Der Regler 7 steuert den Beitrag der Bremskreise II und III in Abhängigkeit von zahlreichen Informationen. Neben den die Stellung des Bremspedals 1 wiedergebenden, über den Geber 5 und die Leitung 6 zugeführten elektrischen Signalen werden dem elektronischen Regler 7 über einen Schaltkreis 14 die Fahrzeuggeschwindigkeit $v_{FZ}$, über einen Schaltkreis 15 das Zuladevermögen der Batterie und über einen Gaspedalstellungsgeber 16 die benötigten Informationen zugeführt. Aus diesen Eingangsdaten, die je nach Ausführungsart der Bremsanlage noch durch weitere Meßwerte oder Daten ergänzt werden, errechnet der elektronische Regler 7 die Steuerdaten für die Ansteuerelektronik 13 des Fahrzeug-Atriebsmotors 12, der zur Rückgewinnung von Energie als Generator geschaltet wird, und den Beitrag, den die Reibungsbremsen 10,11 zur Erzielung einer ausreichenden Abbremsung aufbringen müssen.

Die dargestellte Schaltung der erfindungsgemäßen Bremsanlage macht es möglich, die Bremswirkung des elektrischen Antriebsmotors 12 zur Nachbildung der von herkömmlichen Automobilen gewohnten Schleppmomentwirkung auszunutzen. Wenn der Fahrer das Gaspedal 17 zurücknimmt, entsteht durch das Schleppmoment eine gewisse Fahrzeugverzögerung. Zu diesem Zweck ist das Gaspedal 17 mit dem Stellungsgeber 16 ausgerüstet, dessen Signale ebenfalls im elektronischen Regler 7 ausgewertet werden. Aus Gaspedalstellung und Rücknahmerate kann der Regler 7, in Verbindung mit den Informationen über die Fahrzeuggeschwindigkeit $v_{FZ}$ und über das Zuladevermögen der Batterie (Schaltkreis 15), die notwendigen Steuerdaten für die Steuerung des Antriebsmotors 12 errechnen, um eine sanfte Schleppmomentwirkung zu simulieren.

Der hydraulische, von dem Bremspedal 1 direkt angesteuerte Bremskreis I wird zweckmäßigerweise so ausgelegt, daß der gesamte Bremspedalweg, der üblicherweise zur Betätigung einer hydraulischen Zweikreisbremsanlage mit Tandemhauptzylinder vorgesehen ist, hier bei gleicher oder geringfügig gesteigerter Pedalübersetzung nun allein dem Hinterachsbremskreis I zur Verfügung gestellt wird. Der Zweck dieser Maßnahme besteht darin, die geforderte Hilfsbremsfunktion mit zulässig geringen Fußkräften zu erreichen. Außerdem wird das gewohnte Pedalgefühl beibehalten.

Der maximal mit Hilfe des Bremskreises II erreichbare Bremskraftanteil hängt u.a. von der Fahrzeuggeschwindigkeit $v_{FZ}$ ab. Der Bremskraftanteil des Elektromotors 12 nimmt mit abnehmender Fahrzeuggeschwindigkeit überproportional zu. Diese Bremse hat folglich die Tendenz, sich selbsttätig zu verstärken. Da über den elektro-regenerativen Bremskreis II nur ein begrenzter Teil des Bedarfs an Vorderachs-Bremswirkung gedeckt werden kann, was insbesondere bei höheren Fahrgeschwindigkeiten gilt, ist der zweite Bremskreis II erforderlich. Ferner ist zu beachten, daß der Bremsbeitrag des Bremskreises II auch von dem Ladezustand der Batterie abhängig ist. Es geht das Zuladevermögen der Batterie, das mit dem Schaltkreis 15 erfaßt wird, in die Regelung ein. Da sich mit dem Bremsvorgang die Fahrzeuggeschwindigkeit verringert, wird erfindungsgemäß die Bremskraftverteilung durch den Regler permanent geändert und den Gegebenheiten angepaßt.

In Fig. 1 sind gestrichelt einige weitere Signalleitungen 18 - 21 dargestellt, über die dem elektronischen Regler 7 Informationen über das Bremsmoment an der Hinterachse (Signalleitung 18), das Bremsmoment an der Vorderachse (Signalleitung 20) und über den Druck im Hauptzylinder 2 (Signalleitung 19) sowie im Hauptzylinder 9 (Signalleitung 21) zugeleitet werden. Diese Informationen können zusätzlich oder anstelle der mit Hilfe des Bremspedalstellungsgebers 5 gewonnenen Informationen zur Erzeugung der Ausgangssignale des Reglers 7 ausgewertet werden. Die Signalleitungen 19 und 21 sind an entsprechende Drucksensoren 24,25 angeschlossen, während die Signalleitungen 18 und 20 die Ausgangssignale von Bremsmoment-Sensoren 22,23 zu dem Regler 7 leiten.

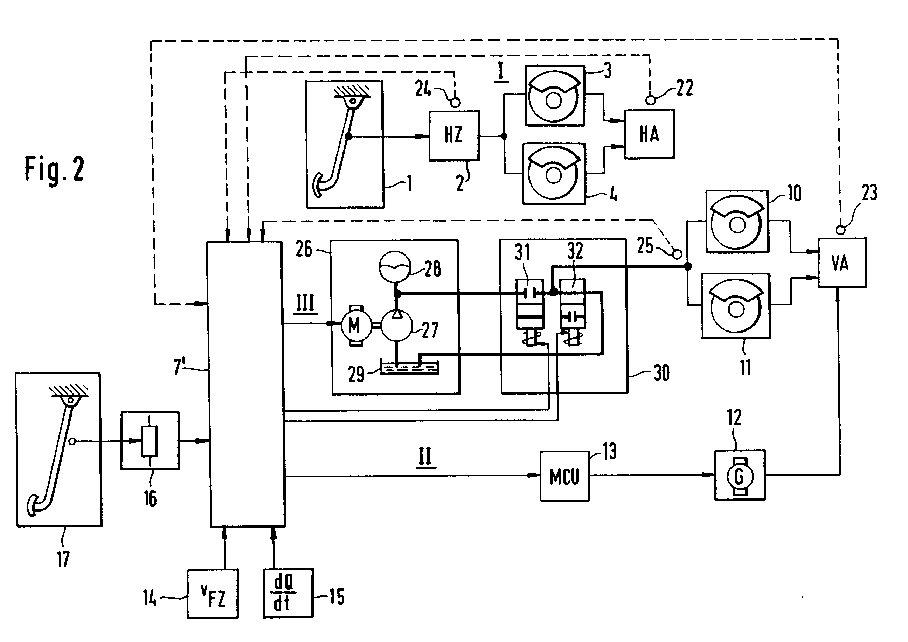

Die Bremsanlage nach Fig. 2 unterscheidet sich von der Anlage nach Fig. 1 vor allem durch die Ausbildung des zweiten, ebenfalls auf die angetriebenen Räder, hier die Räder der Vorderachse VA, wirkenden Bremskreises III. Während im Beispiel nach Fig. 1 der Bremsdruck mit Hilfe eines Aktuators 8 erzeugt wurde, wird im Ausführungsbeispiel nach Fig. 2 eine Hilfsdruckquelle 26 verwendet, die im wesentlichen aus einer elektromotorisch angetriebenen Hydraulikpumpe 27 und einem Hydraulikspeicher 28 besteht. Die Saugseite der Pumpe mündet in einen Druckausgleichsbehälter 29, in den auch in der Druckabbauphase Druckmittel zurückgeführt wird. Zur Regelung des Druckes in den Radbremsen 10,11 an den Rädern der Vorderachse VA ist ein Druckmodulator 30 vorhanden, der hier im wesentlichen aus zwei elektrisch umschaltbaren Hydraulikventilen, nämlich 2/2-Wegeventilen 31 und 32, besteht. Über diese Ventile kann entweder eine Verbindung von der Hilfsdruckquelle 26 zu den Radbremsen 10,11 der Vorderräder oder von diesen Radbremsen zu dem Druckausgleichsbehälter 29 hergestellt werden. Durch Bemessung der Einschaltzeiten der Ventile kann der Druck auf das gewünschte Druckniveau angehoben und wieder abgesenkt werden. Angesteuert werden die Ventile 31,32 des Druckmodulators 30 von dem elektronischen Regler 7', dem hierzu, wie im Beispiel nach Fig. 1, die benötigten Informationen mit Hilfe eines (nicht gezeigten) Bremspedalstellungsgebers oder mit Hilfe der Bremsdrucksensoren 24,25 zugeführt werden. Außerdem erhält der Regler 7' Informationen über die Stellung des Gaspedals 17, über die Fahrzeuggeschwindigkeit $v_{FZ}$ und über das Zuladevermögen der Batterie (Schaltkreis 15). Das elektro-regenerative Bremssystem des Verbundsystems ist wiederum in Form des Bremskreises II ausgebildet.

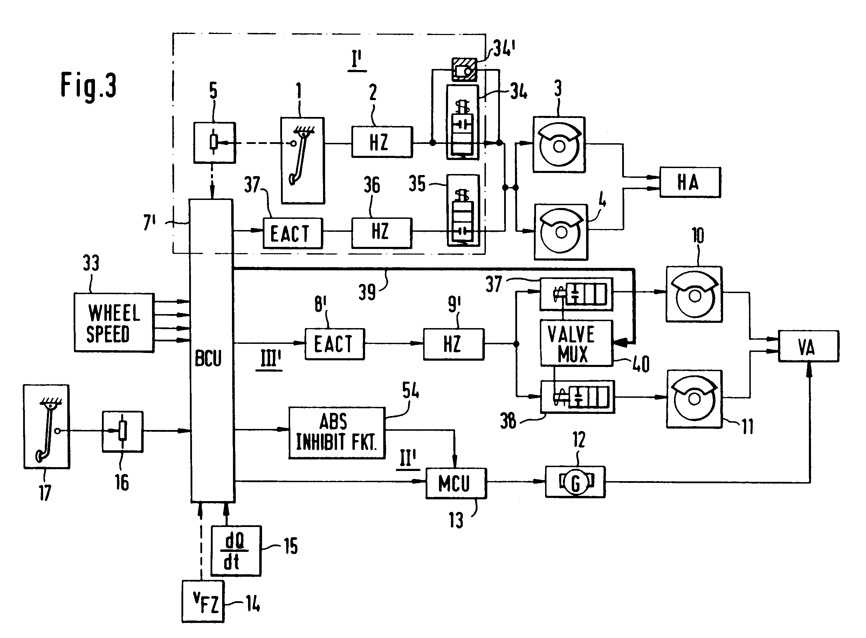

Fig. 3 bezieht sich auf eine Erweiterung der erfindungsgemäßen Bremsanlage zu einem Verbund-Bremsensystem mit Blockierschutz- und/oder Sntriebsschlupfregelung. Um dies zu ermöglichen, werden dem elektronischen Regler 7'' zusätzlich Informationen über das Drehverhalten der einzelnen Fahrzeugräder zugeführt. Die entsprechenden Radsensoren sind durch einen Schaltkreis 33 symbolisiert, der radindividuelle Sensoren mit jeweils einer zu dem Regler 7'' führenden Signalleitung umfaßt.

Außerdem ist in dem hydraulischen Bremskreis I', der zu den Bremsen 3,4 der nicht angetriebenen Räder, der Hinterräder führt, ein in der Ruhestellung offenes, elektrisch auf Sperren umschaltbares Hydraulikventil 34 eingefügt. Während eines Regelungsvorganges wird der Hauptzylinder 2 des Bremskreises I' durch dieses Ventil 34 abgetrennt und statt dessen über ein weiteres Hydraulikventil 35, das in der Ruhestellung gesperrt ist, ein weiterer Hauptzylinder 36 an die Radbremsen 3,4 der Hinterräder angeschlossen. Der Druck in diesem zusätzlichen Hauptzylinder 36 wird mit Hilfe eines elektrisch steuerbaren Aktuators 37, der ebenfalls durch den elektronischen Regler 7'' gesteuert wird, erzeugt und moduliert. Dem Ventil 34 liegt ein Rückschlagventil 34', das sich zum Hauptzylinder 2 hin öffnet, parallel. Dieses Rückschlagventil 34' stellt den Druckabbau beim Lösen der Bremse sicher.

Der elektro-regenerative Bremskreis II' wird im Falle einer Blockierschutz- und/oder Antriebschlupfregelung mit Hilfe eines Sperr-Schaltkreises 54 außer Funktion gesetzt. Das Ausgangssignal dieses Sperr-Schaltkreises 54 steuert hierzu den Antriebsmotor-Ansteuerkreis 13'' an.

In dem dritten Bremskreis III'', der ebenfalls auf die angetriebenen Räder, nämlich die Radbremsen 10,11 der Vorderräder einwirkt, sind ebenfalls, wie im Beispiel nach Fig. 1, ein elektrischer Aktuator 8'' und ein Hauptzylinder 9'' eingefügt. In dem Druckmittelweg von dem Hauptzylinder 9'' zu den Reibungsbremsen 10,11 an den Vorderrädern befinden sich weitere elektrisch steuerbare Hydraulikventile 37,38, mit denen der Bremsdruck in den Radbremsen der Vorderräder in bekannter Weise geregelt werden kann. Angesteuert werden die Hydraulikventile 37,38 in dem Ausführungsbeispiel nach Fig. 3 über einen Multiplex-Schaltkreis 40, zu dem eine Signal-Ausgangsleitung 39 des elektronischen Reglers 7'' führt.

Mit einer solchen Ventilanordnung und Multiplex-Ansteuerung oder mit anderen bekannten Ventilanordnungen läßt sich in den angeschlossenen Radbremsen der Bremsdruck sehr genau auf den für eine Blockierschutzregelung oder Antriebsschlupfregelung günstigen Wert bzw. Druckverlauf einstellen.

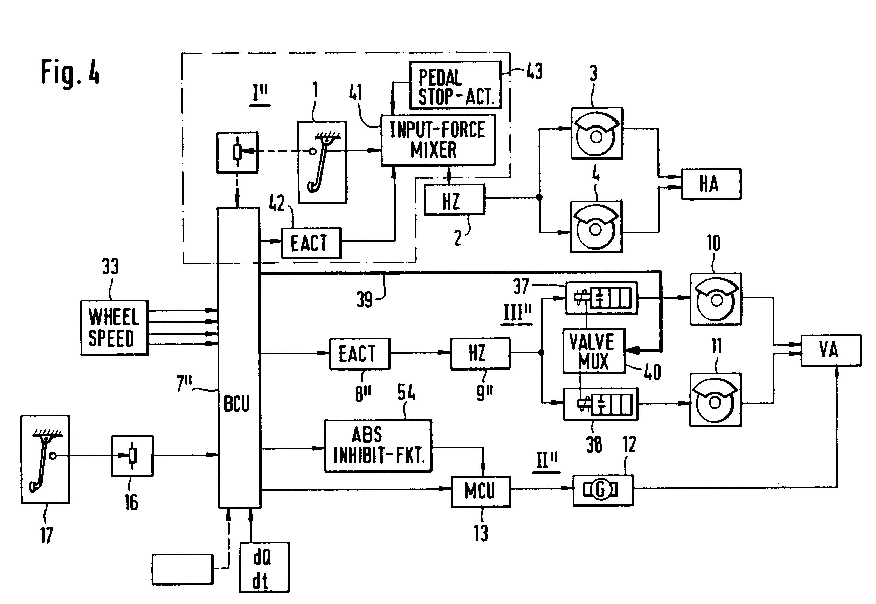

Die Ausführungsart der erfindungsgemäßen Bremsanlage nach Fig. 4 unterscheidet sich von dem soeben beschriebenen Ausführungsbeispiel durch eine sogen. mechanische Summierstufe als Bestandteil des Bremskreises I''. Diese Summierstufe 41 dient zusammen mit einem elektrischen Aktuator 42 und einem Pedalwegbegrenzer 43 zur Blockierschutz- und Antriebsschlupfregelung. Die Summierstufe 41 ist dem Hauptzylinder 2 vorgeschaltet, der den gewünschten Bremsdruck in den angeschlossenen Reibungsbremsen 3,4 an den nicht angetriebenen Rädern der Hinterachse HA hervorruft. Die beiden anderen Bremskreise II', III'' der Bremsanlage nach Anspruch 4 stimmen mit den entsprechenden Bremskreisen nach Fig. 3 überein.

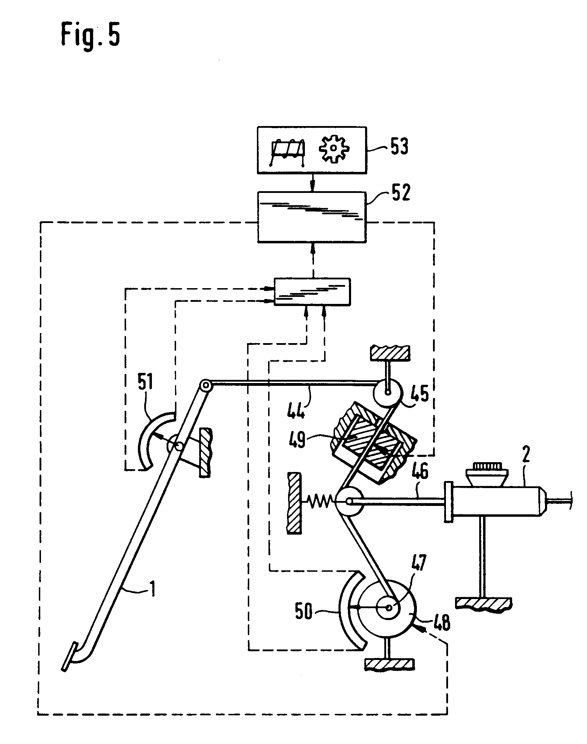

Ein konstruktives Beispiel für die Summierstufe, den Aktuator und den Pedalwegbegrenzer nach Fig. 4 zeigt Fig. 5. Mit dem Bremspedal 1 wird hier über ein Zugseil 44 und eine ortsfeste Umlenkrolle 45 eine Betätigungskraft auf eine Druckstange 46 des Hauptzylinders 2 ausgeübt. Das Zugseil 44 reicht bis zu einer Wickelrolle 47, die durch einen elektrisch angetriebenen und steuerbaren Wickelmotor 48 verdreht werden kann. Das Zugseil 44 durchläuft außerdem eine elektrisch steuerbare bzw. anlegbare Seilklemme 49, die die Funktion des Pedalwegbegrenzers 43 nach Fig. 4 ausübt. Die Seilklemme 49 verhindert, sobald sie das Zugseil 45 eingeklemmt hat, eine weitere Erhöhung der durch das Pedal 1 auf den Hauptzylinder 2 ausübbaren Kraft. Ein U-förmiger Anschlag für die Seilklemme 49 ist in Fig. 5 durch Schraffur gekennzeichnet. Der Wickelmotor 47 übernimmt dann allein die Bewegung der Druckstange 46 des Hauptzylinders und führt die Druckmodulation durch.

Mit der Achse des Motors 48 ist ein Potentiometer 50 gekoppelt, das in Verbindung mit einem Pedalweggeber 51, vergleichbar mit dem Pedalweggeber 5 in Fig. 4, die benötigten Informationen zur Regelung des Wickelvorganges und damit des Bremsdruckes liefert.

Die Steuersignale werden mit Hilfe eines Schaltkreises 52 erzeugt, der die von dem Potentiometer 50 und dem Pedalweggeber 51 gelieferten Signale auswertet, mit den Signalen der symbolisch dargestellten Radsensoren 53 verknüpft und die Stellsignale für den Wickelmotor 48 und die Seilklemme 49 erzeugt.

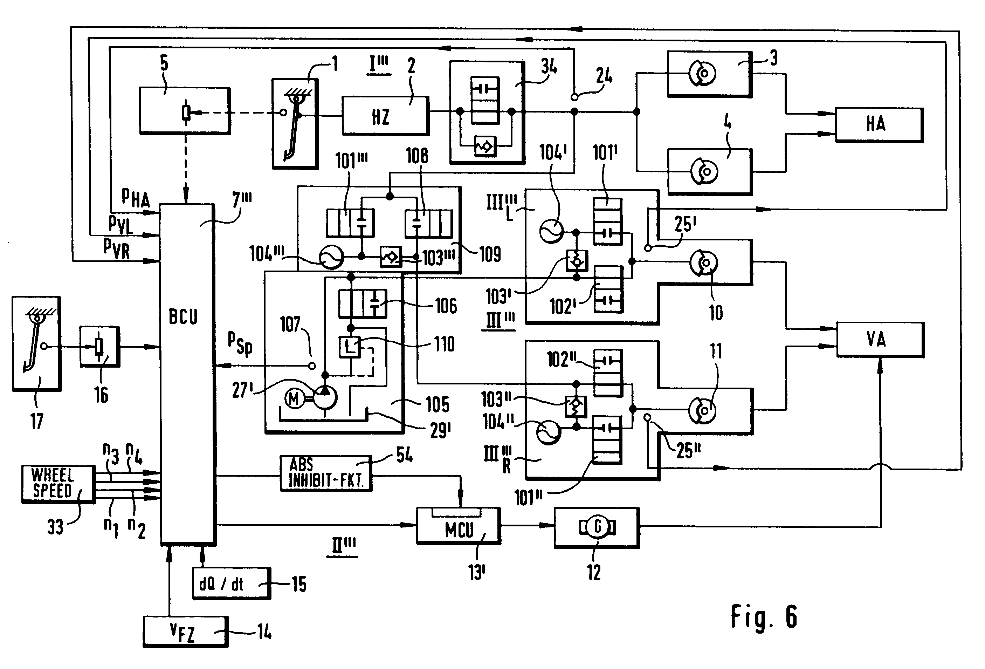

Bei der in Fig. 6 gezeigten Ausführung der erfindungsgemäßen Bremsanlage ist der dritte Bremskreis III'''' in zwei hydraulische Teilbremskreise III$_L$''', III$_R$''' aufgeteilt, die identisch aufgebaut sind. Die Teilbremskreise III$_L$''', III$_R$''' bestehen aus je zwei den Reibungsbremsen 10,11 vorgeschalteten, elektrisch betätigbaren Hydraulikventilen 101',101'', 102',102'' sowie je einem an den Eingangsanschluß des stromlos geschlossenen Ventils 101',101'' angeschlossenen hydraulischen Speicher 104',104'', die gleichzeitig unter Zwischenschaltung je eines Rückschlagventils 103', 103'' über näher nicht bezeichnete hydraulische Leitungen mit einer hydraulischen Hilfsdruckquelle 105 in Verbindung stehen. Jeder der beiden Reibungsbremsen 10,11 ist ein Drucksensor 25',25'' zugeordnet, dessen Aufgabe in der Beschreibung der vorhergehenden Ausführungsbeispiele erläutert wurde. Die Hilfsdruckquelle 105 besteht ähnlich wie bei der Ausführung gemäß Fig. 2 aus einem Motor-Pumpen-Aggregat 27', an dessen Ausgang sowohl die die hydraulischen Teilbremskreise $III_L'''$,$III_R'''$ mit hydraulischem Druckmittel versorgende Leitung als auch eine aus einem stromlos offenen, elektrisch betätigbaren 2/2-Wegeventil 106 sowie einem mit ihm in Serie geschalteten Druckbegrenzungsventil 110 gebildete Ventilanordnung angeschlossen sind, die eine Verbindung zu einem drucklosen Ausgleichbehälter 29' ermöglicht. Außerdem ist eine Meßeinrichtung 107 zur Ermittlung des maximal erreichten hydraulischen Druckes vorgesehen, bei der es sich beispielsweise um einen druckgesteuerten Schalter handeln kann. An den hydraulischen Ausgang der Hilfsdruckquelle 105 ist außerdem ein weiterer hydraulischer Kreis 109 angeschlossen, der aus einem dritten hydraulischen Speicher 104''', zwei elektrisch betätigbaren, vorzugsweise stromlos geschlossenen (SG) 2/2-Wegeventilen 101''',108 sowie einem dritten Rückschlagventil 103''' besteht. Der dritte hydraulische Speicher 104''' steht einerseits über das zum Motor-Pumpen-Aggregat 27' hin schließende dritte Rückschlagventil 103''' in Verbindung mit der hydraulischen Hilfsdruckquelle 105 und ist andererseits über das erste (SG)-2/2-Wegeventil 101''' an die den nicht angetriebenen Räder zugeordneten Reibungsbremsen 3,4 angeschlossen, deren Druck in einem Regelfall durch Umschalten des zweiten (SG)-2/2-Wegeventils 108 (über das offene 2/2-Wegeventil 106) abgebaut werden kann. Die zuletzt genannten Elemente 104''',103''',101''' sowie 108 können in einem Ventilblock untergebracht werden, der vorteilhafterweise mit der Hilfsdruckquelle 105 zu einer konstruktiven Einheit kombiniert sein kann.

Wenn der Speicherdruck eines der hydraulischen Speicher 104',104'',104''' unter einen zulässigen Wert abgesunken ist, wird der betroffene Speicher durch die Hilfsdruckquelle 105 nachgeladen. Zu diesem Zweck werden die Ventile 102',102'',106 bestromt, so daß eine Trennung der den angetriebenen Rädern zugeordneten Reibungsbremsen 10,11 von der Hilfsdruckquelle 105 erfolgt. Nach dem Ladevorgang und dem Entstromen der Ventile 102',102', 106 werden die zu den Vorderradbremsen 10,11 führenden Leitungen drucklos.

Durch diese Schaltung wird erreicht, daß die von der Hilfsdruckquelle 105 zu den Vorderradbremsen 10,11 führende Leitung sowohl zum Laden der Speicher 104',104'',104''' als auch zum Abbau des in den Vorderradbremsen 10,11, wirkenden Druckes benutzt wird. Die Rückschlagventile 103',103'',103''' verhindern eine Rückentleerung der hydraulischen Speicher 104',104'' und 104'''.

Die Funktion der Bremskreise I und II ist identisch mit der vorhin beschriebenen und braucht deshalb nicht erneut erörtert zu werden. Wird bei der Bremsanlage gemäß Fig. 6 eine Bremsung eingeleitet, so wird die durch die Vorderradbremsen 10,11 aufgebrachte Bremskraft durch Bestromen der Hydraulikventile 101',102',101'' und 102'' erhöht und durch Entstromen wieder abgesenkt. Eine Druckhaltephase kann realisert werden, indem die Hydraulikventile 101',101'' entstromt und die Hydraulikventile 102',102'' bestromt werden. Die elektrischen Verbindungen vom Regler 7 zu den genannten Ventilen sind der Übersicht wegen nicht eingezeichnet. In Abhängigkeit von dem benötigten Druck an den Vorderradbremsen 10,11 erzeugt sich der Regler 7 ein Sollwertfenster und steuert die Hydraulikventile 101,102, bis der von den Drucksensoren 25',25'' rückgemeldete Wert in das Sollwertfenster fällt. Durch die Aufteilung des dritten Bremskreises III''' in zwei separate Vorderrad-Teilbremskreise $III_L'''$ und $III_R'''$ besteht die Möglichkeit, situationsabhängig jedes angetriebene Rad mit einem anderen Sollwert zu bremsen und z.B. Funktionen zu realisieren, die mit einer elektronischen Differentialsperre zusammenhängen.

Bei einer Antiblockierschutzbremsung, wie bereits oben beschrieben, wird der regenerative zweite Bremskreis II deaktiviert. Zur Anwendung eines Standard-Antiblockiersystems werden die Radgeschwindigkeitssignale in der dafür vorgesehenen Schaltung 33 ausgewertet. Die Druckmodulation an den Vorderradbremsen 10,11 erfolgt über die Ventile 101',102',101'' und 102''. An der Hinterachse HA wird durch Bestromen des Hydraulikventils 34 zunächst das Pedal 1 in Druckanstiegrichtung positioniert und dann der Druck an der Hinterachse HA durch wechselweises Bestromen der Ventile 101',108 moduliert.

Wenn bei ausgeschöpftem Pedalweg nach einer Druckabbauphase der die Ventile aktivierende Steuerstrom ausfällt, muß der erste Bremskreis I eine Restbremswirksamkeit haben. Zu diesem Zweck werden Volumen und Betätigungsweg des Hauptzylinders 2 so ausgelegt, daß sich der maximale Bremsdruck genügend weit vor dem Erreichen der Kolbenendstellung einstellt. Der hierzu gehörige Betätigungsweg des Hauptzylinders 2 wird durch den Pedalweggeber 5 sensiert und dann an dieser Stelle wird das Pedal 1, unabhängig vom Bremsmodus (Betriebsbremsung oder ABS-Regelung) durch Bestromen des Hydraulikventils 34 in Druckanstiegrichtung positioniert. Auf diese Weise bleibt stets das volle Restvolumen des Hauptzylinders 2 für den ABS-Notfall vorhanden.

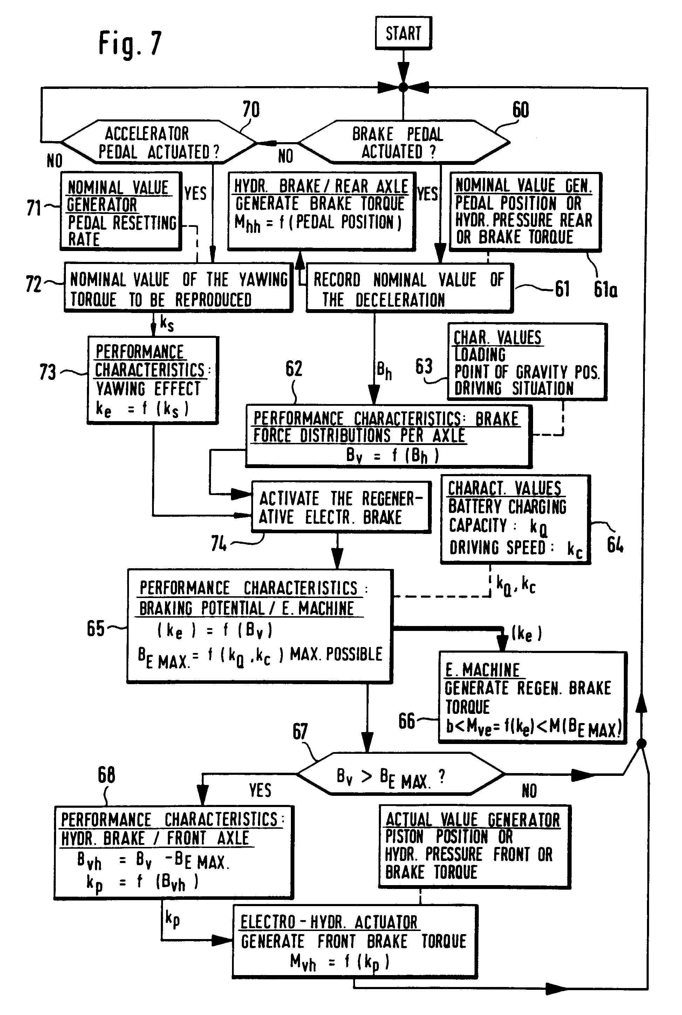

Zur Veranschaulichung der Vorgänge bei Betätigung der erfindungsgemäßen Bremsanlage bzw. des Verbundsystems dient das Ablaufdiagramm nach Fig. 7. Zunächst werden die Vorgänge bei Betätigung des Bremspedals, symbolisiert durch das Verzweigungssymbol 60, verfolgt. Das Bremspedal hat natürlich Vorrang vor dem Gaspedal. Durch Betätigung des Bremspedals 1 (in Fig. 1 - 6) wird unmittelbar hydraulisch ein Bremsmoment an den Rädern der Hinterachse HA erzeugt und gleichzeitig ein Maß für den Sollwert der Verzögerung (61) gewonnen. Die hierzu verwendeten Sollwertgeber (61a) können ein Pedalstellungsgeber 5, Bremsdruckgeber 24 im Hinterachskreis oder Momentengeber 22 an der Hinterachse sein. Diesem Sollwert $B_h$, der gleichzeitig ein Maß für den Bremskraftanteil der Hinterachse darstellt, wird über ein gespeichertes Kennfeld (62) ein von den jeweiligen Bedingungen abhängiger Bremskraftanteil $B_v$ für die Vorderachse zugeordnet. Hierbei wird zweckmäßigerweise die Auswahl des gültigen Kennfeldes durch eine Verknüpfung äußerer Parameter, z.B. Beladung, Schwerpunktslage, Fahrsituation usw. (63) gesteuert. Anstelle der hier beschriebenen Arbeitsweisen mit Kennfeldern können natürlich auch andere Algorithmen Verwendung finden.

Mit Hilfe von Kennwerten über die augenblickliche Fahrgeschwindigkeit ($k_t$) und das momentane Aufnahmevermögen der Batterie bzw. Batterie-Zuladevermögen $k_Q$ (symbolisiert durch das Kennfeld 64) wird in der Stufe 65 über ein gespeichertes Kennfeld der maximal nutzbare Bremskraftanteil $B_{Emax}$ des Antriebsmotors 12 ermittelt und abgefragt, ob der geforderte Wert an Vorderachs-Bremskraft $B_v$ den lieferbaren Wert $B_{Emax}$ übersteigt (66). Wird in der Verzweigung 67 festgestellt, daß der geforderte Wert $B_v$ kleiner ist als der lieferbare Anteil $B_{Emax}$ oder höchstens gleich groß ist, dann wirkt allein die Bremskraft des Antriebsmotors 12 auf die Räder der Vorderachse VA. Aus diesem Wert $B_v$ im Bereich 0... $B_{Emax}$ wird dann in dem hier beschriebenen Ausführungsbeispiel ein Steuerparametersatz $k_e$ für den Antriebsmotor 12 gebildet oder aus einer Tabelle herausgesucht, und es wird die elektro-regenerative Bremsung der Räder an der Vorderachse VA eingeleitet. Übersteigt der geforderte Bremskraftanteil $B_v$ den momentan lieferbaren Anteil $B_{Emax}$, dann wird zusätzlich in der Stufe 68 mit der Differenz $B_{vh} = B_v - B_{Emax}$ in einem weiteren Kennfeld ein Steuerparameter $k_p$ aufgesucht, der den elektrischen Aktuator (8 in Fig. 1) des hydraulischen Vorderachskreises (III) als Sollwert dient, um das restliche Bremsmoment an den Vorderrädern zuzusteuern.

Die beschriebenen Vorgänge werden zyklisch wiederholt und laufen so schnell ab, daß der Bremskraftaufbau an der Vorderachse den Bremskraftaufbau an der Hinterachse ohne spürbare Verzögerung folgt.

Für den Zeitraum eines Antiblockier- oder Antriebsschlupfregelungsvorganges, wie dies anhand der Ausführungen nach Fig. 3, 4 und 5 beschrieben wurde, wird das elektro-regenerative Bremsensystem II' mit Hilfe des Sperrschaltkreises 54, der auf die Motor-Ansteuerelektronik 13' einwirkt, außer Funktion gesetzt.

Zur Nachbildung des Schleppmomentes wird die Gaspedalbewegung, wie dies die Symbole 70,71,72,73 wiedergeben, immer dann überwacht, wenn das Bremspedal 1 nicht betätigt ist. Wenn sich das Gaspedal 17 zurückbewegt, wird aus der Rücknahmerate ein Parameter $k_S$ (72) abgeleitet, dann aus einem Schleppmoment-Kennfeld ein Steuerparametersatz $k_e$ (73) für den Antriebsmotor 12 aufgesucht und die elektro-regenerative Bremse (II,II') aktiviert (74). Der weitere Steuerablauf entspricht dem zuvor beschriebenen. Es ist möglich, den Anteil der Schleppmoment-Wirkung mit dem der Bremspedalwirkung so zu verrechnen, daß sich beide Wirkungen ergänzen und ineinander übergehen.

**Patentansprüche**

1. Bremsanlage für Kraftfahrzeuge mit elektrischem Antrieb und einer angetriebenen und einer nicht angetriebenen Achse, die in Form eines mehrkreisigen, aus hydraulischen Reibungsbremsen (3,4,10,11) und aus einem elektro-regenerativen Bremssystem (II, II') bestehenden Verbundsystems ausgebildet ist, wobei das elektro-regenerative Bremssystem den oder mindestens einen der elektrischen Antriebsmotore (12) des Kraftfahrzeuges zur Abbremsung und zur Energierückgewinnung nutzt und wobei drei Bremskreise (I,I', I'', II,II', II'', III, III' III'') vorgesehen sind, von denen ein Bremskreis (I,I',I'') einen pedalbetätigten Bremsdruckgeber (2) und auf die nicht angetriebenen Räder wirkende Reibungsbremsen (3,4) umfaßt, ein zweiter Bremskreis (II,II') durch das direkt oder indirekt mit dem Bremspedal (1) gekoppelte, auf die angetriebenen Räder wirkende elektro-regenerative Bremssystem gebildet ist und ein dritter Bremskreis (III,III',III'') ebenfalls auf die angetriebenen Räder wirkende, mit dem Bremspedal (1) gekoppelte, Reibungsbremsen (10,11) umfaßt, wobei die Betätigung der an den ersten und der an den dritten Bremskreis (I,III) angeschlossenen Reibungsbremsen (10,11) und die Bremskraftverteilung auf die Vorder- und Hinterachse (VA,HA) mit Hilfe eines elektronischen Reglers (7,7',7'') steuerbar sind, der Informationen über den durch die Pedalbetätigung hervorgerufenen Bremsdruck (19,24) über die Fahrzeuggeschwindigkeit (14) und über den Ladezustand (15) der Fahrzeugbatterien erhält und zur Steuerung der auf die angetriebenen Räder wirkenden Bremsen (10,11) auswertet, dadurch **gekennzeichnet**, daß die auf die angetriebenen Räder wirkenden Reibungsbremsen (10,11) hydraulisch getrennt vom pedalbetätigten Bremsdruckgeber (2) an einen elektrohydraulischen (8,9) Betätigungsmechanismus bzw. Antrieb angeschlossen sind, der durch Ansteuersiganle des Reglers (7,7',7'') angesteuert wird.

2. Bremsanlage für Kraftfahrzeuge mit elektrischem Antrieb und einer angetriebenen und einer nicht angetriebenen Achse, die in Form eines mehrkreisigen, aus hydraulischen Reibungsbremsen (3,4,10,11) und aus einem elektro-regenerativen Bremssystem (II, II') bestehenden Verbundsystems ausgebildet ist, wobei das elektro-regenerative Bremssystem den oder mindestens einen der elektrischen Antriebsmotore (12) des Kraftfahrzeuges zur Abbremsung und zur Energierückgewinnung nutzt und wobei drei Bremskreise (I,I', I'', II,II', II'', III, III' III'') vorgesehen sind, von denen ein Bremskreis (I,I',I'') einen pedalbetätigten Bremsdruckgeber (2) und auf die nicht angetriebenen Räder wirkende Reibungsbremsen (3,4) umfaßt, ein zweiter Bremskreis (II,II') durch das direkt oder indirekt mit dem Bremspedal (1) gekoppelte, auf die angetriebenen Räder wirkende elektro-regenerative Bremssystem gebildet ist und ein dritter Bremskreis (III,III',III'') ebenfalls auf die angetriebenen Räder wirkende, mit dem Bremspedal (1) gekoppelte, Reibungsbremsen (10,11) umfaßt, wobei die Betätigung der an den ersten und der an den dritten Bremskreis (I,III) angeschlossenen Reibungsbremsen (10,11) und die Bremskraftverteilung auf die Vorder- und Hinterachse (VA,HA) mit Hilfe eines elektronischen Reglers (7,7',7'') steuerbar sind, der Informationen über den durch die Pedalbetätigung hervorgerufenen Bremsdruck (19,24) über die Fahrzeuggeschwindigkeit (14) und über den Ladezustand (15) der Fahrzeugbatterien erhält und zur Steuerung der auf die angetriebenen Räder wirkenden Bremsen (10,11) auswertet, dadurch **gekennzeichnet**, daß die auf die angetriebenen Räder wirkenden Reibungsbremsen (10,11) hydraulisch getrennt vom pedalbetätigten Bremsdruckgeber (2) über elektrisch umschaltbare Hydraulikventile (31,32) an eine durch Ansteuersignale des Reglers (7,7',7'') ansteuerbare, aus einer elektromotorisch angetriebenen Hydraulikpumpe (27) sowie einem Hydraulikspeicher (28) bestehende Hilfsdruckquelle und an einen Druckausgleichsbehälter (29) anschaltbar sind.

3. Bremsanlage nach Anspruch 1 oder 2, dadurch **gekennzeichnet,** daß der elektronische Regler (7,7',7'') die Bremskraftverteilung in Abhängigkeit von der Beladung des Fahrzeugs und/oder der dynamischen Achslastverteilung und/oder von der Fahrsituation, z.B. Notbremssituation, variiert.

4. Bremsanlage nach einem der Ansprüche 1, 2 oder 3, dadurch **gekennzeichnet,** daß der erste und dritte hydraulische Bremskreis (I',III'') durch Einfügung von Hydraulikventilen (34,35,37,38), die in Abhängigkeit von dem Drehverhalten der einzelnen Räder mittels einer Mutilplex-Schaltung (40) steuerbar sind, zu einem Blockierschutz- und/oder Antriebsschlupf-Regelungssystem erweitert sind.

5. Bremsanlage nach Anspruch 4, dadurch **gekennzeichnet,** daß der dritte Bremskreis (III'') so aufgeteilt ist, daß eine Betätigung der auf die angetriebenen Räder wirkenden Reibungsbremsen (10,11) unabhänig voneinander möglich ist.

6. Bremsanlage nach Anspruch 5, dadurch **gekennzeichnet**, daß die auf die angetriebenen Räder wirkenden Radbremsen (10,11) über elektrisch umschaltbare Hydraulikventile (101,102,106,102',101'') einerseits an hydraulische Speicher (104',104'') und andererseits an einen Druckausgleichsbehälter (29') aufweisende Hilfsdruckquelle (105) anschließbar sind, wobei an die Hilfsdruckquelle (105) gleichzeitig ein weiterer hydraulischer Speicher (104''') angeschlossen ist, der über weitere elektrisch umschaltbare Hydraulikventile (101'', 108) sowohl mit den auf die nicht angetriebenen Räder wirkenden Reibungsbremsen (3,4) als auch den auf die angetriebenen Räder wirkenden Reibungsbremsen (10,11) verbindbar ist.

7. Bremsanlage nach einem der Ansprüche 4 bis 6, dadurch **gekennzeichnet**, daß für die Dauer einer Blockierschutz- und/oder Antriebsschlupfregelung das elektro-regenerative Bremssystem (II') abschaltbar ist.

8. Bremsanlage nach einem der Ansprüche 4 bis 7, dadurch **gekennzeichnet**, daß auf den Bremsdruckgeber (2) über eine Summierstufe (41) die Pedalkraft und eine mit Hilfe eines Aktuators (42) erzeugte Stellkraft einwirken.

9. Bremsanlage nach Anspruch 8, dadurch **gekennzeichnet**, daß zur Begrenzung der Pedalkraft im Falle einer Blockierschutzregelung ein Pedalwegbegrenzer (43) bzw. Aktuator vorgesehen ist.

## Claims

1. A brake unit for automotive vehicles with electric drive and with a driven and a non-driven axle which is configured in the shape of a multiple-circuit compound system consisting of hydraulic friction brakes (3, 4, 10, 11) and an electroregenerative brake system (II, II'), wherein the electroregenerative brake system utilizes the electric driving motor (12) or at least one of the electric driving motors of the automotive vehicle for braking and for energy recovery, wherein three brake circuits (I, I', I'', II, II', II'', III, III', III'') are provided, i.e. one brake circuit (I, I', I'') which is comprised of a pedal-actuated brake pressure master unit (2) and friction brakes (3, 4) acting upon the said non-driven wheels, a second brake circuit (II, II') which is constituted by the electroregenerative brake system which is directly or indirectly coupled to the brake pedal (1) and which acts on the driven wheels, and a third brake circuit (III, III', III'') which is comprised of friction brakes (10, 11) which also act on the driven wheels and are coupled to the brake pedal (1), and wherein the actuation of the friction brakes (10, 11) which are connected to the second and third brake circuits (II, III) and the distribution of the brake force to the front and rear axles (VA, HA) are controllable with the aid of an electronic controller (7, 7', 7'') which is fed with information on the brake pressure (19, 24) caused by the actuation of the pedal, on the vehicle speed (14) and on the charging condition (15) of the vehicle batteries and evaluates this information for the control of the brakes (10, 11) which act on the driven wheels, **characterized** in that the friction brakes (10, 11) acting on the driven wheels are hydraulically isolated from the pedal-actuated brake pressure master unit (2) and connected to an electrohydraulic (8, 9) actuating mechanism or drive which is operated by actuating signals of the controller (7, 7', 7'').

2. A brake unit for automotive vehicles with electric drive and with a driven and a non-driven axle which is configured in the shape of a multiple-circuit compound system consisting of hydraulic friction brakes (3, 4, 10, 11) and an electroregenerative brake system (II, II'), wherein the electroregenerative brake system utilizes the electric driving motor (12) or at least one of the electric driving motors of the automotive vehicle for braking and for energy recovery, wherein three brake circuits (I, I', I'', II, II', II'', III, III', III'') are provided, i.e. one brake circuit (I, I', I'') which is comprised of a pedal-actuated brake pressure master unit (2) and friction brakes (3, 4) acting upon the said non-driven wheels, a second brake circuit (II, II') which is constituted by the electroregenerative brake system which is directly or indirectly coupled to the brake pedal (1) and which acts on the driven wheels, and a third brake circuit (III, III', III'') which is comprised of friction brakes (10, 11) which also act on the driven wheels and are coupled to the brake pedal (1), and wherein the actuation of the friction brakes (10, 11) which are connected to the second and third brake circuits (II, III) and the distribution of the brake force to the front and rear axles (VA, HA) are controllable with the aid of an electronic controller (7, 7', 7'') which is fed with information on the brake pressure (19, 24) caused by the actuation of the pedal, on the vehicle speed (14) and on the charging condition (15) of the vehicle batteries and evaluates this information for the control of the brakes (10, 11) which act on the driven wheels, **characterized** in that the friction brakes (10, 11) acting on the driven wheels are hydraulically isolated from the pedal-actuated brake pressure master unit (2) and connected, by way of electrically commutatable hydraulic valves (31, 32), to an auxiliary pressure source comprising an electromotively driven hydraulic pump (27) and a hydraulic accumulator (28), and to a pressure balancing tank (29).

3. A brake unit as claimed in claim 1 or 2, **characterized** in that the electronic controller (7, 7', 7'') varies the brake force distribution in dependence on the loading of the vehicle and/or on the distribution of the dynamic axle load and/or on the driving situation, for example, an emergency situation.

4. A brake unit as claimed in anyone of claims 1, 2 or 3, **characterized** in that the first and third hydraulic brake circuits (I', III'') are extended to form an anti-lock control system and/or a traction slip control system by inserting hydraulic valves (34, 35, 37, 38) which are controllable in dependence on the rotational behaviour of the individual wheels by way of a multiplex-circuit (40).

5. A brake unit as claimed in claim 4, **characterized** in that the third brake circuit (III''') is subdivided in such a way that an actuation of the friction brakes (10, 11) acting upon the driven wheels is possible independently of each other.

6. A brake unit as claimed in claim 5, **characterized** in that the wheel brakes (10, 11) acting upon the driven wheels are connectible, by way of electrically commutatable hydraulic valves (101, 102, 106, 102', 101''), on the one hand, to hydraulic accumulators (104', 104'') and, on the other hand, to an auxiliary pressure source (105) including a pressure balancing tank (29'), a further hydraulic accumulator (104''') being additionally connected to the auxiliary pressure source (105) and connectible, through further electrically commutatable hydraulic valves (101'', 108), both to the friction brakes (3, 4) which act upon the non-driven wheels and to the friction brakes (10, 11) which act upon the driven wheels.

7. A brake unit as claimed in anyone of claims 4 to 6, **characterized** in that the electroregenerative brake system (II') can be switched off for the duration of an anti-lock control and/or a traction slip control action.

8. A brake unit as claimed in anyone of claims 4 to 7, **characterized** in that, by way of a totalizing stage (41), the pedal force and an actuating force generated with the aid of an actuator (42) act upon the brake pressure master unit (2).

9. A brake unit as claimed in claim 8, **characterized** in that a pedal travel limiter (43) or a pedal stop actuator is provided for the limitation of the pedal force in the case of an anti-lock control operation.

## Revendications

1. Système de freinage, pour véhicule automobile, qui comporte des moyens d'entraînement électrique, un essieu moteur et un essieu non moteur et qui est réalisé sous forme d'un système composite à plusieurs circuits constitué de freins hydrauliques à friction (3, 4, 10, 11) et d'un dispositif de freinage par récupération de type électrique (II, II'), le dispositif de freinage par récupération de type électrique utilisant le moteur (12) d'entraînement électrique ou au moins l'un des moteurs d'entraînement électrique du véhicule automobile pour le freinage et pour la récupération d'énergie, tandis que trois circuits de frein (I,I', I'', II, II', II'', III, III', III'') sont prévus, à savoir un premier circuit de frein (I, I', I'') qui comprend un générateur de pression de freinage (2), actionné par la pédale, et des freins à friction (3, 4) agissant sur les roues non motrices, un deuxième circuit de frein (II, II') qui est formé par le dispositif de réglage par récupération de type électrique, accouplé directement ou indirectement à la pédale de frein (1) et agissant sur les roues motrices, et un troisième circuit de frein (III, III', III'') comprenant des freins à friction (10, 11) qui, eux aussi, agissent sur les roues motrices et sont accouplésà la pédale de frein (1), tandis que l'actionnement des freins à friction (10, 11) raccordés au deuxième circuit de frein et au troisième circuit de frein (I, III) et la répartition de la force de freinage sur l'essieu avant et l'essieu arrière (VA, HA) peuvent être commandés au moyen d'un régulateur électronique (7, 7', 7'') qui reçoit des informations concernant la pression de freinage (19, 24) provoquée par l'actionnement de la pédale, la vitesse du véhicule(14) et l'état de charge (15) de la batterie du véhicule et qui les exploite pour commander les freins (10, 11) agissant sur les roues motrices, caractérisé en ce qu'en étant isolés, sur le plan hydraulique, du générateur de pression de freinage (2) actionné par la pédale, les freins à friction (10, 11) agissant sur les roues motrices sont raccordés à un mécanisme d'actionnement (8,9) ou moyens d'entraînement, de type électro-hydraulique, qui est commandé au moyen de signaux de commande du régulateur (7, 7', 7'').

2. Système de freinage, pour véhicule automobile, qui comporte des moyens d'entraînement électrique, un essieu moteur et un essieu non moteur et qui est réalisé sous forme d'un système composite à plusieurs circuits constitué de freins hydrauliques à friction (3, 4, 10, 11) et d'un dispositif de freinage par récupération de type électrique (II, II'), le dispositif de freinage par récupération de type électrique utilisant le moteur (12) d'entraînement électrique ou au moins l'un des moteurs d'entraînement électrique du véhicule automobile pour le freinage et pour la récupération d'énergie, tandis que trois circuits de frein (I, I', I'', II, II', II'', III, III', III'') sont prévus, à savoir un premier circuit de frein (I, I', I'') qui comprend un générateur de pression de freinage (2), actionné par la pédale, et des freins à friction (3, 4) agissant sur les roues non motrices, un deuxième circuit de frein (II, II') qui est formé par le dispositif de réglage par récupération de type électrique, accouplé directement ou indirectement à la pédale de frein (1) et agissant sur les roues motrices, et un troisième circuit de frein (III, III', III'') comprenant des freins à friction (10, 11) qui, eux aussi, agissent sur les roues motrices et sont accouplés à la pédale de frein (1), tandis que l'actionnement des freins à friction (10, 11) raccordés au deuxième circuit de frein et au troisième circuit de frein (I, III) et la répartition de la force de freinage sur l'essieu avant et l'essieu arrière (VA, HA) peuvent être commandés au moyen d'un régulateur électronique (7, 7', 7'') qui reçoit des informations concernant la pression de freinage (19, 24) provoquée par l'actionnement de la pédale, la vitesse du véhicule (14) et l'état de charge (15) de la batterie du véhicule et qui les exploite pour commander les freins (10, 11) agissant sur les roues motrices, caractérisé en ce qu'en étant isolés, sur le plan hydraulique, du générateur de pression de freinage (2) actionné par la pédale, les freins à friction (10, 11) agissant sur les roues motrices sont agencés de façon à pouvoir être raccordés, par l'intermédiaire de valves hydrauliques (31, 32) à commutation électrique, à une source de pression auxiliaire qui est formée d'une pompe hydraulique (27), entraînée par un moteur électrique et agencée de façon à pouvoir être commandée par des signaux de commande du régulateur (7, 7', 7''), et d'un accumulateur hydraulique (28), ainsi qu'à un réservoir de comprensation de pression (29).

3. Système de freinage selon la revendication 1 ou 2, caractérisé en ce que le régulateur électronique (7, 7', 7'') fait varier la répartition de la force de freinage en fonction de la charge du véhicule et/ou de la répartition dynamique de la charge par essieu ou de la situation de conduite, par exemple d'une situation de freinage d'urgence.

4. Système de freinage selon l'une des revendications 1, 2 et 3, caractérisé en ce que le premier et le troisième circuit de frein hydraulique (I', III'') sont étendus de façon à former un système de régulation antiblocage et/ou de régulation de glissement de traction, au moyen de l'insertion de valves hydrauliques (34, 35, 37, 38) qui sont agencées de façon à pouvoir être commandées au moyen d'un circuit multiplex (40) en fonction du comportement de rotation des différentes roues.

5. Système de freinage selon la revendication 4, caractérisé en ce que le troisième circuit de frein (III''') est divisé d'une façon telle qu'il est possible d'actionner indépendamment l'un de l'autre les freins à friction (10, 11) agissant sur les roues motrices.

6. Système de freinage selon la revendication 5, caractérisé en ce que les freins de roue (10, 11) agissant sur les roues motrices sont agencés de façon à pouvoir être raccordés par l'intermédiaire de valves hydrauliques à commutation électrique (101, 102, 106, 102', 101'') d'une part à des accumulateurs hydrauliques (104', 104'') et d'autre part à une source de pression auxiliaire (105) comportant un réservoir de compensation de pression (29'), tandis qu'un autre accumulateur hydraulique (104''') est en même temps raccordé à la source de pression auxiliaire (105), cet accumulateur hydraulique étant agencé de façon à pouvoir être relié par l'intermédiaire d'autres valves hydrauliques à commutation électrique (101'', 108) à la fois aux freins à friction (3, 4) agissant sur les roues non motrices et aux freins à friction (10, 11) agissant sur les roues motrices.

7. Système de freinage selon l'une des revendications 4 à 6, caractérisé en ce que le dispositif de freinage à récupération de type électrique (II') est agencé de façon à pouvoir être mis hors service pour la durée d'une régulation antiblocage et/ou d'une régulation du glissement de traction.

8. Système de freinage selon l'une des revendications 4 à 7, caractérisé en ce que la force exercée sur la pédale et une force de réglage produite au moyen d'un actionneur (42) agissent sur le générateur de pression de freinage (2) par l'intermédiaire d'un étage d'addition (41);

9. Système de freinage selon la revendication 8, caractérisé en ce que, pour limiter la force exercée sur la pédale, il est prévu un limiteur de course de pédale (43) ou actionneur dans le cas d'une régulation antiblocage.

Fig.1

EP 0 595 961 B1

Fig. 2

EP 0 595 961 B1

Fig.3

EP 0 595 961 B1

Fig. 4

VA

HA

10

11

3

4

43
PEDAL STOP-ACT.

INPUT-FORCE MIXER

41

1

I''

42

EACT

HZ
2

40
VALVE MUX

37
III''

38

12
G

II''

13
MCU

HZ
9''

54
ABS INHIBIT-FKT.

EACT
8''

39

BCU
7''

33
WHEEL SPEED

16

17

dQ/dt

# Fig. 5

Fig. 6

**Fig. 7**

```
START
```

ACCELERATOR PEDAL ACTUATED? — 70

BRAKE PEDAL ACTUATED? — 60

NO / NO / YES / YES

71 — NOMINAL VALUE GENERATOR PEDAL RESETTING RATE

HYDR. BRAKE / REAR AXLE GENERATE BRAKE TORQUE $M_{hh}$ = f (PEDAL POSITION)

NOMINAL VALUE GEN. PEDAL POSITION OR HYDR. PRESSURE REAR OR BRAKE TORQUE

61a

72 — NOMINAL VALUE OF THE YAWING TORQUE TO BE REPRODUCED

RECORD NOMINAL VALUE OF THE DECELERATION — 61

$k_s$

73 — PERFORMANCE CHARACTERISTICS: YAWING EFFECT $k_e$ = f ($k_s$)

62

$B_h$

CHAR. VALUES LOADING POINT OF GRAVITY POS. DRIVING SITUATION — 63

PERFORMANCE CHARACTERISTICS: BRAKE FORCE DISTRIBUTIONS PER AXLE $B_v$ = f ($B_h$)

ACTIVATE THE REGENERATIVE ELECTR. BRAKE

74

CHARACT. VALUES BATTERY CHARGING CAPACITY: $k_Q$ DRIVING SPEED: $k_c$ — 64

$k_Q$, $k_c$

65 — PERFORMANCE CHARACTERISTICS: BRAKING POTENTIAL / E. MACHINE ($k_e$) = f ($B_v$) $B_{E\ MAX.}$ = f ($k_Q$, $k_c$) MAX. POSSIBLE

($k_e$)

E. MACHINE GENERATE REGEN. BRAKE TORQUE $b < M_{ve}$ = f($k_e$) < M($B_{E\ MAX}$) — 66

67

$B_v > B_{E\ MAX.}$ ?

YES / NO

68 — PERFORMANCE CHARACTERISTICS: HYDR. BRAKE / FRONT AXLE $B_{vh}$ = $B_v$ − $B_{E\ MAX.}$ $k_p$ = f ($B_{vh}$)

ACTUAL VALUE GENERATOR PISTON POSITION OR HYDR. PRESSURE FRONT OR BRAKE TORQUE

$k_p$

ELECTRO - HYDR. ACTUATOR GENERATE FRONT BRAKE TORQUE $M_{vh}$ = f ($k_p$)